# DEMANDE DE BREVET EUROPEEN

(11) **EP 1 883 142 A1**
(43) Date de publication de la demande: **30.01.2008**
(21) Numéro de dépôt: 07111564.6
(22) Date de dépôt: 02.07.2007
(51) Int. Cl.: H02H 3/20, H02H 9/04, H04M 3/18, H04L 25/02

(54) **Protection d'une ligne de comunication**

(30) Priorité: 28.07.2006 FR 0653166
(71) Demandeur: ST MICROELECTRONICS S.A., 92120 Montrouge (FR)
(72) Inventeur: Bremond, André, 37270 Veretz (FR); Appere, Cédric, 37000 Tours (FR)
(74) Mandataire: de Beaumont, Michel

(57) **Abrégé**

L'invention concerne un circuit (3) de protection d'un équipement électronique (2) destiné à être raccordé à au moins un premier conducteur (4) d'une ligne de communication, comportant, entre ce premier conducteur et un deuxième conducteur (5) de la ligne ou la masse à laquelle est connecté l'équipement à protéger, au moins une première branche comportant, en série, un premier élément capacitif et un premier élément de déclenchement à seuil de tension (31, 32), un premier élément résistif (R1, R2) étant connecté en parallèle sur le premier élément capacitif.

## Description

### Domaine de l'invention

La présente invention concerne de façon générale les lignes de communication et, plus particulièrement, la protection d'équipements électroniques connectés sur des lignes de télécommunication qu'il s'agisse de lignes téléphoniques ou de lignes de transmission de données numériques, y compris de réseaux dits privés, de type Ethernet. L'invention concerne plus particulièrement la protection d'équipements connectés à des lignes de communication sans transformateur d'isolation galvanique entre l'équipement et la ligne.

### Exposé de l'art antérieur

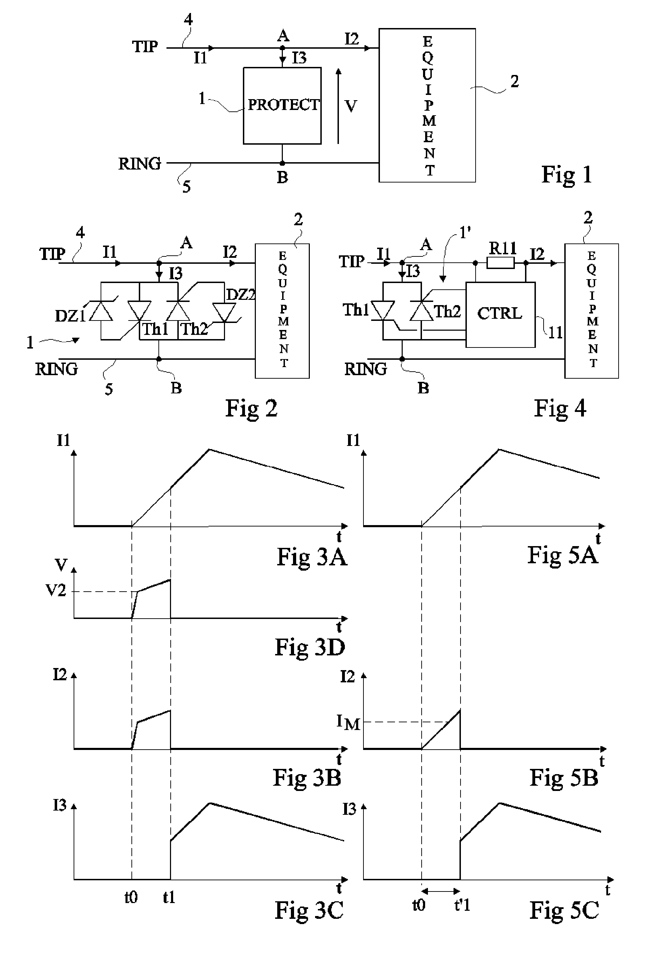

La figure 1 représente, de façon très générale et sous forme de blocs, un exemple de montage d'un circuit 1 de protection (PROTECT) d'un équipement 2 (EQUIPMENT) connecté à une ligne téléphonique (conducteurs TIP 4 et RING 5). L'équipement peut être n'importe quel appareil, dispositif, circuit ou installation, connecté à la ligne. Par exemple, il s'agit d'un poste téléphonique, d'une carte de communication (de type modem), d'une carte d'abonné d'un central de télécommunication ou d'un répartiteur, etc. Le circuit 1 a pour objet d'évacuer les surtensions arrivant sur la ligne afin que celles-ci n'atteignent pas l'équipement 2 qui y est connecté et éviter ainsi de l'endommager. La protection consiste à court-circuiter les deux conducteurs 4 et 5 de la ligne entre eux.

Les surtensions peuvent avoir des origines diverses, notamment la foudre et des connexions accidentelles de la ligne de communication au réseau de distribution électrique.

La figure 2 représente un premier exemple classique de circuit de protection 1. Le circuit 1 comporte deux thyristors Th1 et Th2 en parallèle et en sens inverse entre les deux conducteurs 4 (TIP) et 5 (RING). Les gâchettes des thyristors Th1 et Th2 sont reliées à leurs anodes respectives par une diode Zener DZ1 ou DZ2. Les anodes des thyristors Th1 et Th2 sont respectivement reliées aux conducteurs 4 (borne A) et 5 (borne B). Lorsqu'une surtension de valeur crête supérieure à la tension seuil d'une des diodes Zener DZ1 ou DZ2 apparaît sur la ligne (entre les deux conducteurs), un courant est injecté dans la gâchette du thyristor auquel cette diode est associée. Ce thyristor s'amorce, ce qui provoque un court-circuit entre les deux conducteurs et annule la surtension de façon à protéger l'équipement 2 en aval.

Les figures 3A, 3B, 3C et 3D illustrent, par des chronogrammes, le fonctionnement du circuit de protection 1 de la figure 2 en présence d'une perturbation sur la ligne. La figure 3A représente un exemple d'allure du courant I1 arrivant sur un des conducteurs (par exemple 4) de la ligne. La figure 3B représente l'allure du courant 12 allant de la borne A à l'équipement 2. La figure 3C représente l'allure du courant 13 entre les bornes A et B du circuit de protection. La figure 3D représente l'allure de la tension V entre les bornes A et B.

En fonctionnement normal (avant un instant t0), le courant I1 présent sur la ligne est négligeable par rapport à celui circulant en cas de surcharge et n'est donc pas représenté aux figures. Le circuit 1 est inactif et le courant 12 est égal au courant I1. On suppose l'arrivée d'une perturbation à un instant t0, par une augmentation du courant I1. L'arrivée de cette perturbation entraîne une augmentation de la tension V entre les bornes A et B. Quand cette tension atteint le seuil V_{Z} (figure 3D) de déclenchement d'une des diodes Zener (dans l'exemple d'orientation des courants pris aux figures, la diode DZ1), un courant (une partie du courant I1) est injecté dans une gâchette d'un des thyristors (ici Th1) jusqu'à ce que celui-ci s'amorce (instant t1). A partir de cet instant t1, les bornes A et B sont court-circuitées et le courant 13 dans le circuit de protection 1 devient égal au courant I1 (en négligeant les pertes résistives dans les interrupteurs à état passant). Entre les instants t0 et t1, le circuit de protection n'est pas encore amorcé de sorte que le courant 13 est nul. Le courant 12 allant jusqu'à l'équipement 2 suit alors l'allure de la tension V.

Un inconvénient est qu'avec les miniaturisations et l'intégration de plus en plus poussée des modules électroniques constituant les équipements de communication 2, les surcharges temporaires (entre les instants t0 et t1) avant le déclenchement de la protection peuvent être suffisantes pour endommager les composants. Typiquement, le courant 12 pendant la phase d'amorçage peut atteindre plusieurs ampères durant quelques microsecondes. Une telle énergie peut être suffisante pour endommager l'équipement à protéger.

La figure 4 représente, de façon très schématique et sous forme de blocs, un deuxième exemple de circuit 1' de protection d'un équipement de communication 2. Le principe est le même que dans le premier exemple, à savoir établir un court-circuit entre les conducteurs 4 et 5. Comme précédemment, deux thyristors Th1 et Th2 sont connectés en parallèle et en sens inverse entre deux bornes A et B respectivement connectées aux conducteurs 4 et 5. La différence par rapport au montage précédent est la commande des thyristors qui est effectuée par un circuit 11 (CTRL) mesurant à la fois la tension entre les deux conducteurs et le courant dans l'un des deux. Dans l'exemple, le courant est mesuré sur le conducteur 4 au moyen d'une résistance R11 de conversion courant-tension intercalée entre la borne A et l'équipement 2. Les bornes de la résistance R11 sont reliées au circuit 11 qui fournit les signaux de commande des gâchettes des thyristors Th1 et Th2. Le circuit 11 tire généralement son alimentation de la ligne en ayant une borne connectée à la borne B (borne sur le conducteur opposé à celui possédant la résistance R11) de sorte à être en permanence connecté entre les bornes A et B. Cette connexion permet également de mesurer la tension aux bornes de la ligne pour déclencher le système en mode tension comme dans le circuit de la figure 2. Lorsque le courant dépasse un seuil fixé par le circuit 11, un courant de commande est injecté dans l'une des deux gâchettes en fonction du sens du courant, de façon à amorcer l'un des deux thyristors pour, comme dans le cas de la figure 2, mettre la ligne en court-circuit.

Les figures 5A, 5B et 5C illustrent par des chronogrammes le fonctionnement du circuit de protection de la figure 4. Ces figures représentent respectivement des exemples d'allure des courants I1 sur le conducteur 4 en amont de la borne A côté ligne, 12 entre la borne A et l'équipement 2, et 13 dans le circuit 1'. Comme précédemment, on suppose l'arrivée d'une surcharge à un instant t0 à partir duquel le courant I1 croît, le courant 12 suit l'allure du courant I1 tant que l'un des thyristors n'est pas rendu passant. Le circuit de commande 11 déclenche l'amorçage à partir d'un seuil de courant I_{M}. Comme pour le circuit précédent, l'amorçage d'un des thyristors n'est pas immédiat de sorte que le courant 12 continue à augmenter jusqu'à cet amorçage. Ce courant peut, comme précédemment, atteindre plusieurs dizaines d'ampères pendant quelques microsecondes et peut donc être suffisant pour endommager l'équipement à protéger.

Dans les deux cas, le risque est d'autant plus grand que la perturbation est brusque (foudre).

Selon que l'équipement à protéger est dans un système de télécommunication placé côté abonné ou côté central, on se trouve dans une situation telle qu'illustrée où la ligne est constituée de deux conducteurs 4 (TIP) et 5 (RING) qui sont court-circuités, ou dans une situation non représentée pour l'instant où chaque ligne à protéger est constituée d'un seul conducteur relié à la masse par un circuit de protection du type de ceux illustrés par les figures 2 et 4.

### Résumé de l'invention

La présente invention vise à pallier tout ou partie des inconvénients des circuits connus de protection de lignes de communication.

L'invention vise plus particulièrement le problème du temps d'amorçage d'interrupteurs court-circuitant les conducteurs d'une ligne à protéger ou connectant un de ces conducteurs à la masse pour évacuer les surcharges.

L'invention vise également une solution compatible avec la fragilité des équipements à protéger.

L'invention vise également une solution compatible que ce soit côté abonné ou côté central d'un réseau téléphonique.

L'invention vise en outre une solution applicable à des réseaux de communication de données.

Pour atteindre tout ou partie de ces objets ainsi que d'autres, la présente invention prévoit un circuit de protection d'un équipement électronique destiné à être raccordé à au moins un premier conducteur d'une ligne de communication, comportant, entre ce premier conducteur et un deuxième conducteur de la ligne ou la masse à laquelle est connecté l'équipement à protéger, au moins une première branche comportant, en série, un premier élément capacitif et un premier élément de déclenchement à seuil de tension, un premier élément résistif étant connecté en parallèle sur le premier élément capacitif.

Selon un mode de réalisation de la présente invention, la première branche comporte en outre une première diode en série.

Selon un mode de réalisation de la présente invention, une deuxième branche comporte, en série, un deuxième élément capacitif et un deuxième élément de déclenchement en tension, un deuxième élément résistif étant connecté en parallèle sur le deuxième élément capacitif.

Selon un mode de réalisation de la présente invention, la deuxième branche comporte en outre une deuxième diode en série.

Selon un mode de réalisation de la présente invention, les seuils de déclenchement en tension sont choisis pour être supérieurs à la tension maximale des signaux normaux véhiculés par la ligne de communication.

Selon un mode de réalisation de la présente invention, le ou lesdits éléments de déclenchement en tension sont constitués de diodes Zener.

L'invention prévoit également un dispositif de protection d'un équipement électronique destiné à être raccordé à au moins un premier conducteur d'une ligne de communication, comportant, en parallèle entre ce premier conducteur et un deuxième conducteur de la ligne, ou la masse à laquelle est connecté l'équipement à protéger :
au moins un circuit de protection capacitive ; et
au moins un circuit de protection de type court-circuitant les premier et deuxième conducteurs ou reliant le premier conducteur à la masse.

Selon un mode de réalisation de la présente invention, un élément résistif additionnel est intercalé, sur le premier conducteur, entre les deux circuits de protection.

L'invention prévoit également un procédé de protection d'un équipement électronique destiné à être raccordé à au moins un premier conducteur d'une ligne de communication, combinant une protection court-circuitant ce premier conducteur avec un deuxième conducteur de la ligne ou reliant ce premier conducteur à la masse, avec une protection capacitive reliant les premier et deuxième conducteurs ou le premier conducteur à la masse.

### Brève description des dessins

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles:
la figure 1, décrite précédemment, représente un exemple de système de raccordement sur un réseau de télécommunication du type auquel s'applique la présente invention ;
la figure 2, décrite précédemment, représente un premier exemple classique de circuit de protection ;
les figures 3A, 3B, 3C et 3D, décrites précédemment, illustrent par des chronogrammes le fonctionnement du circuit de la figure 2 ;
la figure 4, décrite précédemment, représente un deuxième exemple classique de circuit de protection ;
les figures 5A, 5B et 5C, décrites précédemment, illustrent par des chronogrammes le fonctionnement du circuit de la figure 4 ;
la figure 6 représente, de façon très schématique et sous forme de blocs, un mode de réalisation d'un dispositif de protection selon la présente invention ;
les figures 7A, 7B, 7C et 7D illustrent, par des chronogrammes, le fonctionnement du dispositif de protection de la figure 6 ;
la figure 8 représente un mode de réalisation du dispositif de la figure 6 dans un exemple d'environnement ;
la figure 9 illustre, de façon très schématique et sous forme de blocs, un premier exemple d'application d'un dispositif de protection ;
la figure 10 illustre, de façon très schématique et sous forme de blocs, un deuxième exemple d'application d'un dispositif de protection ; et
la figure 11 illustre, de façon très schématique et sous forme de blocs, un troisième exemple d'application d'un dispositif de protection.

De mêmes éléments ont été désignés par de mêmes références aux différentes figures qui ont été tracées sans respect d'échelle. Pour des raisons de clarté, seuls les éléments utiles à la compréhension de l'invention ont été représentés et seront décrits. En particulier, les équipements à protéger par un dispositif de protection de ligne n'ont pas été détaillés, l'invention étant compatible avec tout équipement classique auquel s'applique un circuit de protection à court-circuit.

### Description détaillée

Selon un aspect de la présente invention, le début d'une surcharge (avant l'amorçage d'un circuit à interrupteurs effectuant un court-circuit) est traité par un circuit capacitif disposé entre un circuit court-circuitant et un équipement à protéger.

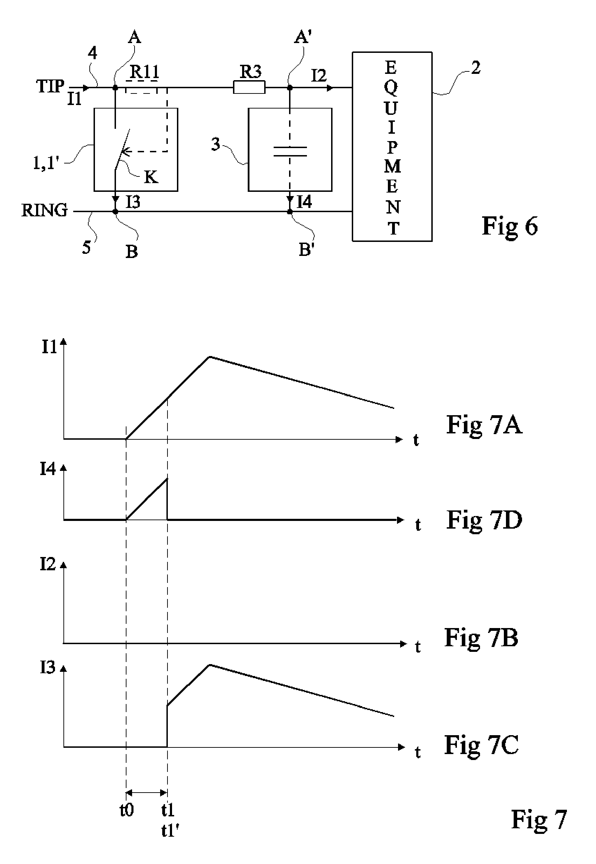

La figure 6 représente, de façon très schématique et sous forme de blocs, un système de protection d'une ligne selon un aspect de la présente invention. On suppose le cas d'une ligne à deux conducteurs 4 (TIP) et 5 (RING), côté abonné d'un réseau de téléphonie. Un circuit 1 ou 1' à interrupteur(s) K est relié, côté ligne entre des bornes A et B, en amont d'un équipement 2 à protéger. En figure 6, un circuit 1' a été illustré en pointillés avec sa résistance R11 et sa deuxième connexion au conducteur 4 pour la conversion courant-tension.

Un circuit capacitif 3 relie les conducteurs 4 et 5 entre le circuit 1 (ou 1') et l'équipement 2. Une première borne A' du circuit 3 est connectée au conducteur 4. Une deuxième borne B' est reliée au conducteur 5. Le circuit 3 est, de préférence, bidirectionnel et son rôle est de relier les bornes A' et B' par au moins un élément capacitif de façon à évacuer le début des surcharges avant que le circuit 1 (ou 1') court-circuitant entre en action. De préférence, une résistance R3 est intercalée entre les bornes A et A'.

On aurait pu penser relier les bornes A' et B' directement par un condensateur. Toutefois, une telle solution aurait été incompatible avec les fonctionnements normaux des systèmes de télécommunication. En particulier, le décroché et raccroché d'un combiné téléphonique peut générer des surtensions sur la ligne et donc amorcer un tel système. Par ailleurs, les systèmes de transmission numérique de type modem utilisant les réseaux de télécommunication ont de plus en plus des signaux rapides (haute fréquence) qui nécessitent de faibles capacités de ligne pour rester exploitables par les équipements connectés.

Les figures 7A, 7B, 7C et 7D illustrent par des chronogrammes le fonctionnement d'un dispositif de protection selon la présente invention. La figure 7A représente un exemple d'allure du courant I1. La figure 7B représente l'allure du courant 12 côté équipement à protéger. La figure 7C illustre l'allure du courant 13 dans le circuit court-circuitant 1 ou 1'. La figure 7D illustre l'allure du courant 14 dans le circuit capacitif 3.

Comme précédemment, on suppose l'apparition d'une surcharge à un instant t0 à partir duquel le courant I1 sur la ligne commence à croître fortement et un déclenchement d'un circuit de protection court-circuitant à un instant t1 ou t1'. Pour simplifier, les instants t1 et t1' ont été illustrés simultanés mais les délais de déclenchement des circuits 1 (à mesure de tension) et 1' (à mesure de courant) n'ont en pratique aucune raison d'être identiques.

Comme la surcharge apparaissant sur la ligne est brusque, elle est d'abord absorbée par le circuit capacitif 3 comme l'illustre la croissance du courant 14 entre les instants t0 et t1 (ou t1'). Par conséquent, le courant 12 côté équipement à protéger reste nul sur toute la période de surcharge.

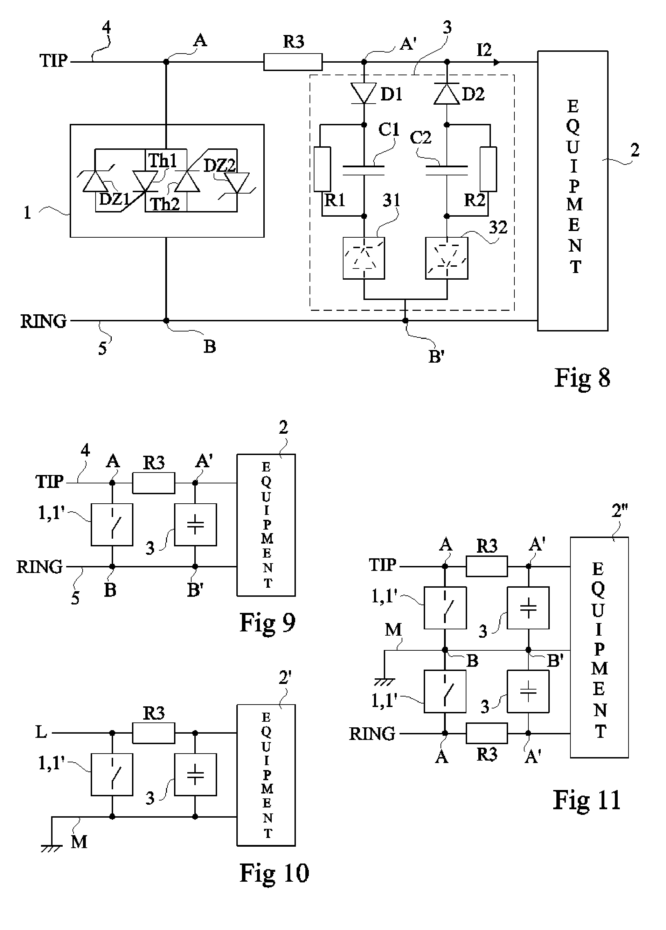

La figure 8 représente un mode de réalisation d'un circuit capacitif 3 dans son environnement. On suppose un circuit 1 du type de celui de la figure 2 mais il peut également s'agir d'un circuit du type de celui de la figure 4 et, plus généralement, de tout type de circuit court-circuitant à interrupteur(s).

Selon ce mode de réalisation, le circuit 3 est constitué de deux branches en parallèle entre les bornes A' et B'. Chaque branche comporte, en série, une diode D1, respectivement D2, un élément capacitif C1, respectivement C2 et un élément de déclenchement à seuil de tension 31, respectivement 32. Des résistances R1 et R2 sont respectivement connectées en parallèle sur les éléments capacitifs C1 et C2. Les diodes D1 et D2 sont en sens inverse d'une branche à l'autre pour être respectivement affectées aux surcharges dans un sens et dans l'autre.

Les dispositifs 31 et 32 à seuil de tension (par exemple des diodes Zener) sont choisis pour présenter, respectivement dans un sens ou dans l'autre, un seuil de déclenchement supérieur à la tension maximum normale sur la ligne (généralement la tension dite de batterie). Leur rôle est de n'activer l'évacuation d'une surtension par les éléments capacitifs C1 et C2 que pour des signaux supérieurs à cette tension normale. Par conséquent, des signaux tels que ceux apparaissant lors des raccrochés/décrochés, ainsi que des signaux de transmission de données de type ADSL ou VDSL, etc. ne déclenchent pas le dispositif.

Le rôle des résistances R1 et R2 est de décharger les capacités respectives C1 et C2 une fois que la surtension a disparu. Ces résistances sont choisies de valeurs importantes (plusieurs mégohms) de façon à préserver un fonctionnement normal de la ligne lors de la décharge des éléments C1 et C2.

Les diodes D1 et D2 permettent de diminuer la valeur de la capacité parasite vue de la ligne pour rendre le dispositif compatible avec les systèmes de transmission numérique.

La résistance optionnelle R3 maintient une tension entre les bornes A et A', de sorte que le déclenchement de la protection capacitive 3 ne nuise pas à l'amorçage du circuit de protection court-circuitant 1 ou 1'. La résistance R3 est choisie de valeur relativement faible (par rapport à la résistance de la ligne) de façon à ne pas introduire de résistance série préjudiciable au fonctionnement normal de la ligne. Dans le cas d'un circuit à interrupteur du type de celui de la figure 4, le rôle de la résistance R3 peut être joué par la résistance R11.

L'ordre de connexion des circuits court-circuitant et capacitif entre la ligne et l'équipement à protéger doit être respecté si une résistance R3 est utilisée, le circuit capacitif devant être entre le circuit à interrupteur(s) et l'équipement à protéger.

Selon des variantes distinctes ou combinables :
les circuits de déclenchement à seuil 31 et 32 sont constitués soit de composants de type "Zener" ou de composants de type "court-circuitant".

A titre d'exemple particulier de réalisation, un circuit de protection 3 tel qu'illustré à la figure 8 a été réalisé avec les composants suivants :
condensateurs C1 et C2 : 1 microfarad ;
résistances R1 et R2 : 10 mégohms ;
résistance R3 : 1 ohm ;
diodes Zener DZ31 et DZ32 : 65 volts ; et
diodes D1 et D2 : 1 ampère, 300 volts.

Les figures 9, 10 et 11 illustrent trois exemples de montage possible d'un dispositif de protection selon la présente invention pour protéger un équipement 2 à connecter à une ligne de communication.

La figure 9 représente un premier cas qui correspond au cas décrit à titre d'exemple aux figures précédentes, c'est-à-dire d'un équipement 2 côté abonné d'un réseau de télécommunication, l'équipement étant à relier à deux conducteurs TIP et RING d'une ligne. Les circuits 1 (ou 1') court-circuitant et capacitif 3 sont destinés à relier les conducteurs 4 et 5 de la ligne en cas de surcharge.

La figure 10 représente le cas où seul un conducteur (par exemple TIP ou RING, mais plus généralement un conducteur L) de ligne est utilisé par l'équipement à protéger 2'. Il s'agit, par exemple, du cas d'un réseau de type Ethernet. Dans ce cas, la ligne L à protéger est reliée par les circuits 1 (ou 1') et 3 à la masse M.

La figure 11 représente le cas d'un équipement 2" (par exemple, une carte électronique de répartition) côté central d'un réseau de télécommunication. Les conducteurs TIP et RING sont individuellement protégés par des circuits 1, 1' et 3 les reliant à la masse M. On considère ici qu'il y a en fait deux lignes à protéger.

Bien entendu, la présente invention est susceptible de diverses variantes et modifications qui apparaîtront à l'homme de l'art. En particulier, le choix des seuils à donner aux éléments 31 et 32 de déclenchement dépend de l'application et du réseau de télécommunication auquel est destiné le circuit de protection. Les dimensions à donner aux éléments capacitifs et résistifs sont à la portée de l'homme de l'art. En outre, pour le cas où les risques de surcharge ne seraient que d'une seule polarité, le circuit de protection capacitif peut être réduit à une seule branche.

## Revendications

1. Circuit (3) de protection d'un équipement électronique (2, 2', 2") destiné à être raccordé à au moins un premier conducteur (4, 5, TIP, RING, L) d'une ligne de communication, **caractérisé en ce qu'**il comporte, entre ce premier conducteur et un deuxième conducteur (5, RING) de la ligne ou la masse (M) à laquelle est connecté l'équipement à protéger, au moins une première branche comportant, en série, un premier élément capacitif (C1, C2) et un premier élément de déclenchement à seuil de tension (31, 32, DZ31, DZ32), un premier élément résistif (R1, R2) étant connecté en parallèle sur le premier élément capacitif.

2. Circuit selon la revendication 1, dans lequel la première branche comporte en outre une première diode (D1, D2) en série.

3. Circuit selon l'une quelconque des revendications 1 et 2, dans lequel une deuxième branche comporte, en série, un deuxième élément capacitif (C2) et un deuxième élément de déclenchement en tension (32, DZ2), un deuxième élément résistif (R2) étant connecté en parallèle sur le deuxième élément capacitif.

4. Circuit selon la revendication 3, dans lequel la deuxième branche comporte en outre une deuxième diode (D2) en série.

5. Circuit selon l'une quelconque des revendications 1 à 4, dans lequel les seuils de déclenchement en tension sont choisis pour être supérieurs à la tension maximale des signaux normaux véhiculés par la ligne de communication.

6. Circuit selon l'une quelconque des revendications 1 à 5, dans lequel le ou lesdits éléments de déclenchement en tension (31, 32) sont constitués de diodes Zener.

7. Dispositif de protection d'un équipement électronique (2, 2', 2") destiné à être raccordé à au moins un premier conducteur (4, 5, TIP, RING, L) d'une ligne de communication, **caractérisé en ce qu'**il comporte, en parallèle entre ce premier conducteur et un deuxième conducteur (5, RING) de la ligne, ou la masse (M) à laquelle est connecté l'équipement à protéger :
au moins un circuit de protection capacitive (3) conforme à l'une quelconque des revendications 1 à 6 ; et
au moins un circuit de protection (1, 1') de type court-circuitant les premier (4, TIP) et deuxième (5, RING) conducteurs ou reliant le premier conducteur (TIP, RING, L) à la masse (M).

8. Dispositif selon la revendication 7, dans lequel un élément résistif additionnel (R3) est intercalé, sur le premier conducteur (4, TIP, L), entre les deux circuits de protection.

9. Procédé de protection d'un équipement électronique (2, 2', 2") destiné à être raccordé à au moins un premier conducteur (4, 5, TIP, RING, L) d'une ligne de communication, **caractérisé en ce qu'**il combine une protection (1, 1') court-circuitant ce premier conducteur avec un deuxième conducteur de la ligne ou reliant ce premier conducteur à la masse (M), avec une protection capacitive (3) reliant les premier et deuxième conducteurs ou le premier conducteur à la masse.

10. Procédé selon la revendication 9, dans lequel la protection capacitive (3) est obtenue par un circuit selon l'une quelconque des revendications 1 à 6.
